# EUROPÄISCHE PATENTSCHRIFT

(11) **EP 2 569 820 B1**
(45) Veröffentlichungstag und Bekanntmachung des Hinweises auf die Patenterteilung: **10.01.2018**
(21) Anmeldenummer: 11710742.5
(22) Anmeldetag: 22.03.2011
(51) Int. Cl.: H02P 1/22, G01S 13/44, G01S 7/40, G01S 13/48, G01S 13/87, G01S 13/93, H01P 5/12, H01P 1/18, H01Q 1/32, H01Q 3/24, H01Q 3/28, H01Q 25/00, G01S 7/03, H01Q 21/06, H01P 1/22

(54) **FAHRERASSISTENZEINRICHTUNG FÜR EIN FAHRZEUG, FAHRZEUG UND VERFAHREN ZUM BETREIBEN EINES RADARGERÄTS**
DRIVER ASSISTANCE DEVICE FOR A VEHICLE, VEHICLE AND METHOD FOR OPERATING A RADAR UNIT
DISPOSITIF D'AIDE À LA CONDUITE POUR UN VÉHICULE, VÉHICULE ET PROCÉDÉ POUR FAIRE FONCTIONNER UN APPAREIL RADAR

(30) Priorität: 10.05.2010 DE 102010020022
(43) Veröffentlichungstag der Anmeldung: 20.03.2013
(73) Patentinhaber: Valeo Schalter und Sensoren GmbH, 74321 Bietigheim-Bissingen (DE)
(72) Erfinder: PAPZINER, Uwe, 74321 Bietigheim-Bissingen (DE); KUENZLER, Frank, 76703 Kraichtal (DE)
(86) Internationale Anmeldenummer: PCT/EP2011/054298
(87) Internationale Veröffentlichungsnummer: WO 2011/141210

(56) Entgegenhaltungen:
- EP-A1- 0 083 476
- EP-A1- 2 071 670
- US-A- 3 742 392
- US-A1- 2008 165 049
- RIGOLAND P ET AL: "Wide-band planar arrays for radar applications", PHASED ARRRAY SYSTEMS AND TECHNOLOGY, 1996., IEEE INTERNATIONAL SYMPOS IUM ON BOSTON, MA, USA 15-18 OCT. 1996, NEW YORK, NY, USA,IEEE, US, 15. Oktober 1996 (1996-10-15), Seiten 163-167, XP010204741, DOI: DOI:10.1109/PAST.1996.566076 ISBN: 978-0-7803-3232-4
- BOZMAROV J ET AL: "Application of microwave absorbers in multilayer antenna arays", MICROWAVES, RADAR AND WIRELESS COMMUNICATIONS, 2002. MIKON-2002. 14TH INTERNATIONAL CONFERENCE ON MAY 20-22, 2002', PISCATAWAY, NJ, USA,IEEE, Bd. 3, 20. Mai 2002 (2002-05-20), Seiten 914-917, XP010593058, ISBN: 978-83-906662-5-9

## Beschreibung

Die Erfindung betrifft eine Fahrerassistenzeinrichtung für ein Fahrzeug, welche ein Radargerät zur Detektion von fahrzeugexternen Objekten umfasst. Das Radargerät weist eine Antenneneinheit zum Abstrahlen und/oder Empfangen elektromagnetischer Wellen sowie ein mit der Antenneneinheit gekoppeltes Dämpfungsglied zum Leiten und Dämpfen der elektromagnetischen Wellen auf. Über das Dämpfungsgebiet ist die Antenneneinheit mit einer Sender- und/oder Empfängereinrichtung des Radargeräts koppelbar. Die Erfindung betrifft außerdem ein Fahrzeug mit einer solchen Fahrerassistenzeinrichtung, wie auch ein Verfahren zum Betreiben eines Radargerätes in einem Fahrzeug.

Vorliegend gilt das Interesse dem Dämpfungsglied, welches zum Dämpfen der elektromagnetischen Wellen dient. Solche Dämpfungsglieder werden im Stand der Technik insbesondere bei Sendeantennengruppen eingesetzt, bei denen eine Schwenkung der Hauptkeule der Richtcharakteristik auf elektronischem Wege (Beamforming) oder eine Umschaltung zwischen verschiedenen Richtungen der Hauptkeule (Beam Switching) - ebenfalls auf elektronischem Wege - realisiert wird. Es werden im Stand der Technik eine Vielzahl von Antenneneinheiten eingesetzt; jede Antenneneinheit beinhaltet ein oder mehrere einzelne Antennenelemente und wird separat - das heißt unabhängig von den anderen Antenneneinheiten - gespeist. Die Antenneneinheiten, die beispielsweise nebeneinander angeordnet sein können, werden jeweils mit einem hochfrequenten Signal gespeist. Der Pegel der Signale nimmt ausgehend von einer mittleren Antenneneinheit beziehungsweise einem Zentrum der Antennengruppe zu den an den jeweiligen Rändern befindlichen Antenneneinheiten hin symmetrisch ab. Dies ist erforderlich, um die Nebenkeulen der Antennencharakteristik auf weniger als -13 dB gegenüber der Hauptkeule zu unterdrücken. Andernfalls ist bei Anregung aller Antenneneinheiten mit Signalen gleichen Pegels (so genannte "Boxcar Exitation") maximal eine Unterdrückung der Nebenkeulen von -13 dB erzielbar. Gerade zum Zwecke der Verringerung des Pegels für die einzelnen außerhalb der Mitte liegenden Antenneneinheiten werden Dämpfungsglieder eingesetzt (auch unter der Bezeichnung "Attenuator" oder "Abschwächer" bekannt). Diese müssen einen stabilen korrekten Dämpfungswert und vor allem keine Phasenverschiebung zueinander aufweisen.
Dämpfungsglieder können durch den Einsatz von Widerstandspaste - beispielsweise bei Herstellung der Antenneneinheiten in LTCC(Low Temperature Cofired Ceramics)-Technologie - realisiert werden. Es sind außerdem Widerstandsfolien bekannt, die bei Dämpfungsgliedern eingesetzt werden können. Die mit einer Widerstandspaste oder einer Widerstandsfolie aufgebauten Dämpfungsglieder weisen jedoch aufgrund von Prozesstoleranzen beziehungsweise Prozessungenauigkeiten erhebliche Streuungen der Widerstandswerte auf. Für Hochfrequenzsubstrate existiert bislang kein Verfahren, die Dämpfungswerte durch Aufbringen einer Widerstandspaste oder einer Widerstandsfolie mit höchster Genauigkeit beziehungsweise mit geringer Toleranz einzustellen.
Es sind aus dem Stand der Technik auch bereits hochgenaue Dämpfungsglieder bekannt, nämlich in SMD(Surface-Mounted-Device)-Technologie. Solche Bauelemente sind jedoch vergleichsweise teuer.
Eine weitere Möglichkeit besteht in dem Einsatz von π beziehungsweise T-Dämpfungsgliedern, die über drei Widerstände realisiert werden. Diese Dämpfungsglieder können jedoch im Frequenzbereich von Radargeräten - zum Beispiel 24 GHz - nicht mit ausreichender Genauigkeit hergestellt werden. Insbesondere die Reproduzierbarkeit der Phasenverschiebung eines jeden Dämpfungsgliedes kann bei dieser Alternative - aufgrund der Notwendigkeit des Einsatzes von SMD-Widerständen - nicht erzielt werden. US-A-2008/0165049 offenbart eine Fahrerassistenzeinrichtung für ein Fahrzeug nach dem Oberbegriff des Anspruchs 1. Es ist Aufgabe der Erfindung, einen Weg aufzuzeigen, wie ein Dämpfungsglied für ein Radargerät einer Fahrerassistenzeinrichtung der eingangs genannten Gattung ohne einen unzumutbaren Aufwand mit sehr hoher Genauigkeit im Hinblick auf den Dämpfungswert sowie die Phasenverschiebung aufgebaut werden kann.
Diese Aufgabe wird erfindungsgemäß durch eine Fahrerassistenzeinrichtung mit den Merkmalen gemäß Patentanspruch 1, wie auch durch ein Fahrzeug mit den Merkmalen gemäß Patentanspruch 7 sowie ein Verfahren mit den Merkmalen gemäß Patentanspruch 8 gelöst. vorteilhafte Ausführungen der Erfindung sind Gegenstand der abhängigen Patentansprüche und der Beschreibung.

Eine erfindungsgemäße Fahrerassistenzeinrichtung für ein Fahrzeug umfasst ein Radargerät zur Detektion von fahrzeugexternen Objekten. Das Radargerät umfasst eine Antenneneinheit zum Abstrahlen und/oder Empfangen elektromagnetischer Wellen sowie ein mit der Antenneneinheit gekoppeltes Dämpfungsglied zum Leiten und Dämpfen der elektromagnetischen Wellen. Über das Dämpfungsglied ist die Antenneneinheit mit einer Sender- und/oder Empfängereinrichtung des Radargeräts koppelbar. Das Dämpfungsglied umfasst eine Verzweigungseinheit mit einem ersten Leitungszweig zum Leiten der gedämpften elektromagnetischen Wellen zwischen der Sender- und/oder Empfängereinrichtung einerseits und der Antenneneinheit andererseits sowie einen mit dem ersten Leitungszweig gekoppelten zweiten Leitungszweig, welcher mit einem reflexionsfreien Abschlusselement abgeschlossen ist.

Der erfindungsgemäße Effekt wird also durch ein Dämpfungsglied mit einer Verzweigungseinheit erzielt, durch welche ein Teil der Leistung der elektromagnetischen Wellen abgegriffen und abgeführt wird, nämlich auf ein reflexionsfreies Abschlusselement. Also übernimmt die Verzeigungseinheit die Funktion des Teilens der Leistung der elektromagnetischen Wellen. Der erste Leitungszweig wird zur Speisung der Antenneneinheit verwendet, während der zweite Leitungszweig mit dem reflexionsfreien Abschlusselement abgeschlossen und somit zum Vernichten des abgegriffenen Teils der Leistung dient.

Die erfindungsgemäße Vorgehensweise hat diverse Vorteile: Das Dämpfungsglied kann kostengünstig hergestellt werden; es sind lediglich zwei Leitungszweige - zum Beispiel zwei Streifenleitungen - und ein reflexionsfreies Abschlusselement erforderlich. Es müssen außerdem keine diskreten Bauelemente, wie SMD-Bauelemente, keine Widerstandspaste sowie keine Widerstandsfolie in den ersten Leitungszweig - also den Signalzweig der Antenneneinheit - eingesetzt werden. Dies vermeidet Ungenauigkeiten in der Phasenverschiebung des Dämpfungsgliedes, wie auch in seinem Dämpfungswert, was im Stand der Technik zur Verschlechterung der Richtcharakteristik und somit der gesamten Leistungsfähigkeit des Radargerätes führt. Es ist somit in einer Serienfertigung das Risiko von Abweichungen der Phasenverschiebung und des Dämpfungswerts einzelner Dämpfungsglieder von Sollwerten auf ein Minimum reduziert. Die Verzweigungseinheit kann nämlich mittels recht genau herstellbarer Leitungsstrukturen - beispielsweise Leiterbahnstrukturen auf einer Platine - realisiert werden, was gleich bleibende Eigenschaften in der Serienfertigung mit großen Stückzahlen gewährleistet. Die für die Herstellung der Verzweigungseinheit notwendigen Kosten sind sehr gering, da keine speziellen und teuren Hochfrequenzbauelemente, Materialien oder Prozesse benötigt werden.

Die Verzweigungseinheit ist bevorzugt in Streifenleitertechnik, insbesondere in Mikrostreifentechnik, realisiert. Dann sind der erste und der zweite Leitungszweig jeweils eine Streifenleitung, insbesondere eine Mikrostreifenleitung. Es können aber auch andere Arten von Streifenleitungen vorgesehen sein, wie beispielsweise Koplanarleitungen und ähnliche. Die Ausführung der Verzweigungseinheit in Streifenleitertechnik sorgt - insbesondere bei Einsatz von Patch-Antennen - für ein kompaktes und bauraumsparendes Dämpfungsglied. Streifenleitungen sind außerdem kostengünstiger als andere Wellenleitungen und lassen sich mit hoher Genauigkeit reproduzierbar und materialsparend fertigen. Dies erweist sich insbesondere bei einer Vielzahl von Antenneneinheiten als besonders vorteilhaft, die - außer den mittleren Antenneneinheiten - jeweils ein Dämpfungsglied benötigen. Dann sind nämlich eine Vielzahl von Verzweigungseinheiten mit gleichen Phaseneigenschaften und höchst genauen Dämpfungswerten nötig.

Es erweist sich als besonders vorteilhaft, wenn die Verzweigungseinheit eine Parallelzweigung (auch unter der Bezeichnung "T-junction" oder "Leistungsteiler" bekannt) aufweist. Dann sind der erste und der zweite Leitungszweig elektrisch miteinander verbunden. Diese Ausführungsform sorgt für ein besonders kompaktes Dämpfungsglied. Somit kann das Dämpfungsglied auch bei solchen Radargeräten eingesetzt werden, bei denen relativ wenig Platz zwischen den einzelnen, auf einem gemeinsamen Substrat angebrachten Antenneneinheiten zur Verfügung steht. Eine Parallelzweigung hat außerdem den Vorteil, dass der gewünschte Dämpfungswert des Dämpfungsgliedes ohne viel Aufwand und besonders exakt realisiert werden kann; durch geeignete Wahl der Leitungsimpedanzen des ersten und des zweiten Leitungszweigs - und genauer gesagt der jeweiligen λ/4-Transformatoren - lassen sich die gewünschten Leistungsverteilungen realisieren. Auch die Impedanzanpassung kann bei einer Parallelzweigung ohne viel Aufwand - durch Einsatz von λ/4-Transformatoren - erzielt werden. Es ist vorteilhaft, wenn zumindest ein Abschnitt der jeweiligen λ/4-Transformatoren ringsegmentförmig bzw. schlingenförmig ausgeführt ist; dann ist die Verzweigungseinheit besonders kompakt.

In einer alternativen Ausführungsform weist die Verzweigungseinheit einen Richtkoppler auf, nämlich insbesondere einen TEM(Transverse Electro Magnetic)-Leitungskoppler oder einen Hybrid-Koppler (auch unter den Bezeichnungen "4 x λ/4-Leitungskoppler" oder "Branchline-Koppler" oder "90°-Ringhybrid" bekannt). Bei einem TEM-Leitungskoppler ist der erste Leitungszweig von dem zweiten Leitungszweig elektrisch getrennt und parallel zum zweiten Leitungszweig angeordnet. Auch mit solchen Richtkopplern kann ein Teil der Leistung der elektromagnetischen Wellen abgegriffen und auf das reflexionsfreie Abschlusselement abgeführt werden.

Das reflexionsfreie Abschlusselement befindet sich in dem zweiten Leitungszweig und beeinflusst somit nicht die Phase des über den ersten Leitungszweig übertragenen Signals. Somit kann das Abschlusselement prinzipiell auf beliebige Art und Weise realisiert werden; es ist lediglich erforderlich, dass keine nennenswerten Reflexionen am Abschlusselement stattfinden. Unter dem "reflexionsfreien Abschlusselement" wird insbesondere ein solches verstanden, bei welchem die Leistungsreflexionen weniger als -10 dB, insbesondere weniger als -15 dB, noch bevorzugter weniger als -20 dB, betragen. Hinsichtlich des reflexionsfreien Abschlusselements sind verschiedenste Ausführungsformen sinnvoll möglich:

Das Abschlusselement kann einen Widerstand aufweisen, der über ein elektrisches Kurzschlusselement auf ein Bezugspotential - das heißt auf Masse - geführt ist. Ist der zweite Leitungszweig eine Mikrostreifenleitung, so handelt es sich bei dem Kurzschlusselement um ein sich über ein Substrat hindurch erstreckendes Element, welches den Widerstand mit einer Massenfläche elektrisch verbindet (via). Auf diesem Wege gelingt es, ohne viel Aufwand ein reflexionsfreies Abschlusselement bereitzustellen; der Widerstand kann ein SMD-Bauelement, eine Widerstandspaste und/oder eine Widerstandsfolie sein.

Das Abschlusselement kann aber auch ein von einem Bezugspotential elektrisch getrennter beziehungsweise ein masseloser Absorber sein. Dann erübrigt sich der Einsatz eines Kurzschlusselementes. Ein solcher Absorber kann beispielsweise in Form eines Absorberkeils, eines Spiralabsorbers, eines Resonanzabsorbers oder eines Widerstandsbelages bereitgestellt sein. Alle genannten Absorberarten weisen einen kleinen Reflexionsfaktor auf.

Das Radargerät kann zumindest vier Antenneneinheiten - zum Beispiel acht Antenneneinheiten - aufweisen. Zumindest zwei Antenneneinheiten können jeweils über ein genanntes Dämpfungsglied mit der Sender- und/oder Empfängereinrichtung des Radargerätes gekoppelt sein. Die jeweiligen Dämpfungsglieder können unterschiedliche Dämpfungswerte aufweisen. In einer Verwirklichung dieser Ausführungsform kann das Radargerät eine Antennengruppe mit acht Antenneneinheiten beinhalten, die jeweils eine Vielzahl von Patch-Antennenelementen aufweisen. Jede Antenneneinheit kann mit der Sender- und/oder Empfängereinrichtung separat gekoppelt sein. Die zwei äußersten Antenneneinheiten können jeweils über ein solches Dämpfungsglied mit der Sender-und/oder Empfängereinrichtung gekoppelt sein, welches den größten Dämpfungswert aufweist. Die zwei mittleren Antenneneinheiten sind bevorzugt über keine Dämpfungsglieder mit der Sender- und/oder Empfängereinrichtung gekoppelt; es wird bevorzugt lediglich die Länge der die mittleren Antenneneinheiten mit der Sender-und/oder Empfängereinrichtung koppelnden Wellenleitungen und somit ihre Phasenverschiebung an die Phasenverschiebung der Dämpfungsglieder angepasst. Die zu den mittleren Antenneneinheiten nach außen hin benachbarten Antenneneinheiten sind bevorzugt jeweils über ein solches Dämpfungsglied mit der Sender- und/oder Empfängereinrichtung gekoppelt, welches den geringsten Dämpfungswert aufweist. Die zu den äußersten Antenneneinheiten nach innen hin benachbarten Antenneneinheiten sind jeweils mit einem solchen Dämpfungsglied gekoppelt, welches einen mittleren Dämpfungswert aufweist. Es liegt somit eine bezüglich der mittleren Antenneneinheiten symmetrische Pegelverteilung der Signale vor.

Es wird bevorzugt ein Dauerstrichradar als Radargerät verwendet, welcher zum Abstrahlen einer frequenzmodulierten kontinuierlichen elektromagnetischen Welle ausgebildet ist (auch unter der Bezeichnung FMCW(frequency modulated continuous wave)-Radar bekannt). Mit einem solchen Radargerät gelingt es, die Entfernung eines Objektes von selbigem Radargerät zu bestimmen, wie auch die relative Geschwindigkeit des Objekts bezüglich des Radargeräts sowie die relative Position. Das Radargerät kann eine Sendeantenneneinrichtung sowie eine davon separate Empfangsantenneneinrichtung beinhalten. Das genannte Dämpfungsglied wird bevorzugt für die Sendeantenneneinrichtung verwendet. Dann ist die Antenneneinheit über das Dämpfungsglied mit einer Sendereinrichtung gekoppelt, während die Empfangsantenneneinrichtung mit einer Empfängereinrichtung gekoppelt ist. Eine solche Empfängereinrichtung kann zum Beispiel einen Mischer, einen Tiefpassfilter, einen rauscharmen Verstärker sowie einen Analog-Digital-Wandler umfassen. Die durch die Empfangsantenneneinrichtung empfangenen Signale werden dann in der Empfängereinrichtung in das Basisband herabgemischt, tiefpassgefiltert und analog-digital-gewandelt beziehungsweise diskretisiert. Die Sendeantenneneinrichtung kann mittels eines lokalen Oszillators zur Erzeugung eines Sendesignals gespeist werden. Das Sendesignal kann auch dem Mischer in der Empfängereinrichtung zugeführt werden, um die empfangenen Signale in das Basisband herabzumischen. Die Sendeantenneneinrichtung kann im Fahrzeug zumindest in azimutaler Richtung phasengesteuert werden, um so insgesamt einen relativ breiten Azimutwinkelbereich mit einer schmalen Hauptkeule der Richtcharakteristik in horizontaler Richtung erfassen zu können.

Ein erfindungsgemäßes Fahrzeug, insbesondere ein Kraftwagen, umfasst eine erfindungsgemäße Fahrerassistenzeinrichtung oder eine bevorzugte Ausgestaltung davon.

Ein erfindungsgemäßes Verfahren ist zum Betreiben eines Radargerätes einer Fahrerassistenzeinrichtung in einem Fahrzeug ausgelegt. Es werden elektromagnetische Wellen durch eine Antenneneinheit des Radargerätes abgestrahlt und/oder empfangen und über ein mit der Antenneneinheit gekoppeltes Dämpfungsglied geleitet und gedämpft, über welches die Antenneneinheit mit einer Sender- und/oder Empfängereinrichtung des Radargeräts gekoppelt ist. Die elektromagnetischen Wellen werden über einen ersten Leitungszweig einer Verzweigungseinheit des Dämpfungsgliedes zwischen der Sender- und/oder Empfängereinrichtung einerseits und der Antenneneinheit andererseits geleitet sowie über einen mit dem ersten Leitungszweig gekoppelten zweiten Leitungszweig auf ein reflexionsfreies Abschlusselement geführt.

Die mit Bezug auf die erfindungsgemäße Fahrerassistenzeinrichtung vorgestellten bevorzugten Ausführungsformen und deren Vorteile gelten entsprechend für das erfindungsgemäße Fahrzeug und das erfindungsgemäße Verfahren.

Weitere Vorteile der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele näher erläutert, wie auch unter Bezugnahme auf die beigefügten Zeichnungen.

Es zeigen:
- Fig. 1: in schematischer Darstellung eine Draufsicht auf ein Kraftfahrzeug gemäß einer Ausführungsform der Erfindung;
- Fig. 2: ein Blockschaltbild eines Radargeräts, wie es in dem Kraftfahrzeug gemäß Fig. 1 eingesetzt wird;
- Fig. 3: in schematischer Darstellung eine Sendeantenneneinrichtung, wie sie in dem Radargerät gemäß Fig. 2 eingesetzt wird;
- Fig. 4a: in schematischer und mehrfach vergrößerter Darstellung eine Wellenleitung (Layout) mit angepasster Länge beziehungsweise Phasenverschiebung; und
- Fig. 4b bis 4d: in schematischer und mehrfach vergrößerter Darstellung jeweils ein Dämpfungsglied (Layout) mit einem unterschiedlichen Dämpfungswert gemäß einer Ausführungsform der Erfindung.

In den Figuren werden gleiche und funktionsgleiche Elemente mit den gleichen Bezugszeichen versehen.

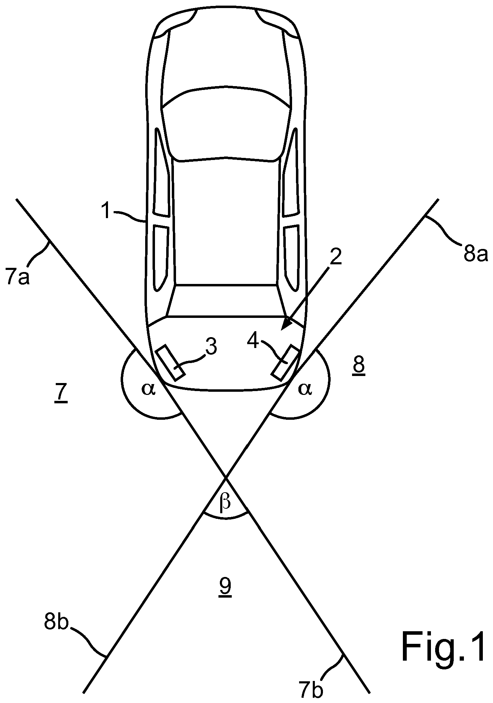

Ein in Fig. 1 dargestelltes Kraftfahrzeug 1 umfasst eine Fahrerassistenzeinrichtung 2, die den Fahrer beim Führen des Kraftfahrzeugs 1 unterstützt. Die Fahrerassistenzeinrichtung 2 kann beispielsweise ein Überwachungssystem für den Totwinkel und/oder ein Unfallfrüherkennungssystem, insbesondere für die Auffahrunfälle von hinten, und/oder ein ACC(Adaptive Cruise Control)-System sein. Die Fahrerassistenzeinrichtung 2 umfasst ein erstes Radargerät 3 sowie ein zweites Radargerät 4. Das erste Radargerät 3 ist in einer linken Ecke eines hinteren Stoßfängers und das zweite Radargerät 4 in einer rechten Ecke desselben Stoßfängers angeordnet.

Das erste Radargerät 3 erfasst einen Erfassungsbereich 7. Der Erfassungsbereich 7 ist durch einen Azimutwinkel α definiert, welcher in Fig. 1 durch zwei Linien 7a, 7b begrenzt ist.

Entsprechend weist das zweite Radargerät 4 einen Erfassungsbereich 8 auf, welcher durch einen entsprechenden Azimutwinkel α definiert ist. Der Azimutwinkel α ist durch zwei Linien 8a, 8b begrenzt.

Die Azimutwinkel α betragen im Ausführungsbeispiel etwa 170°. Die Erfassungsbereiche 7, 8 der Radargeräte 3, 4 überschneiden sich, so dass ein Überlappungsbereich 9 gegeben ist. Der Überlappungsbereich 9 ist durch die Linien 7b, 8b winkelig begrenzt. Im Ausführungsbeispiel beträgt ein Öffnungswinkel β des Überlappungsbereichs 9 etwa 70°.

In ihren jeweiligen Erfassungsbereichen 7, 8 können die Radargeräte 3, 4 Objekte orten. Insbesondere können die Radargeräte 3, 4 eine Entfernung eines Objektes von dem jeweiligen Radargerät 3, 4, einen Zielwinkel sowie eine relative Geschwindigkeit des Objektes bezüglich des Kraftfahrzeugs 1 bestimmen. Wie aus Fig. 1 hervorgeht, umfassen die Erfassungsbereiche 7, 8 der Radargeräte 3, 4 auch die jeweiligen Totwinkelbereiche des Kraftfahrzeugs 1, das heißt solche Bereiche, die durch den Fahrer weder im Innenspiegel noch in den Außenspiegeln einsehbar ist.

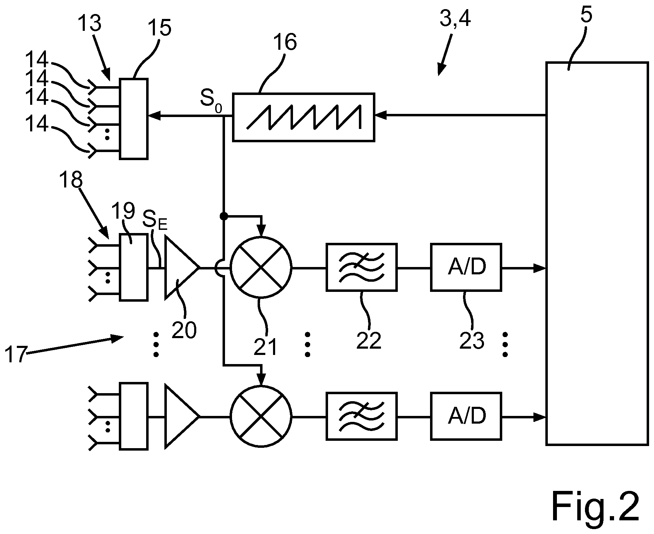

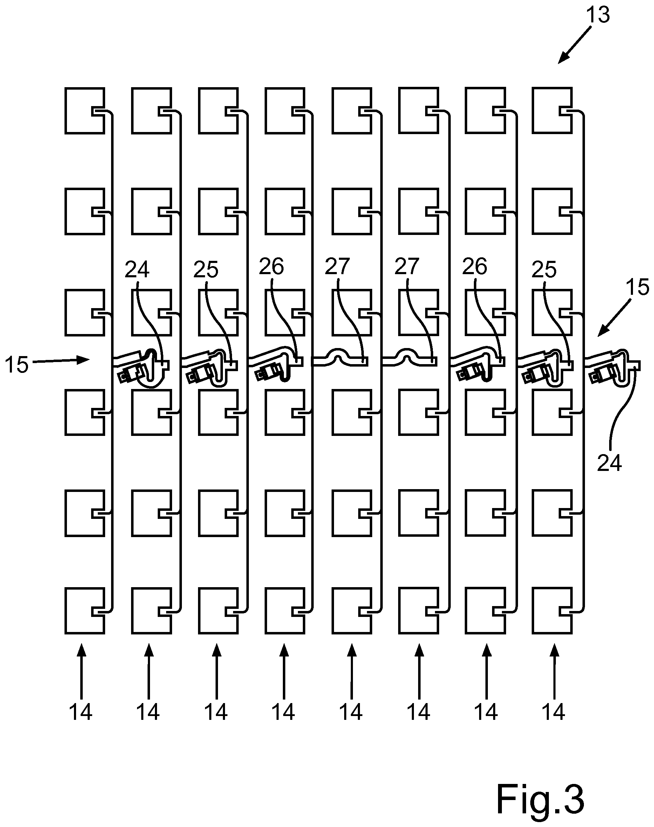

Fig. 2 zeigt ein Blockschaltbild eines einzelnen Radargerätes 3, 4 einschließlich einer Steuereinrichtung 5. Das Radargerät 3, 4 umfasst eine Sendeantenneneinrichtung 13, die eine Gruppe von Antenneneinheiten 14 umfasst, die separat voneinander gespeist werden. Die einzelnen Antenneneinheiten 14 können jeweils eine Vielzahl von Patch-Antennen umfassen (siehe Fig. 3). Die Sendeantenneneinrichtung 13 wird über eine Speiseschaltung 15 gespeist, nämlich mit Hilfe eines lokalen Oszillators 16. Dieser erzeugt ein Sendesignal S₀. Das Sendesignal S₀ ist eine frequenzmodullierte elektromagnetische Welle, deren Frequenz im Ausführungsbeispiel einen sägezahnförmigen Verlauf aufweist. Also ist das Sendesignal S₀ frequenzmodulliert; seine Frequenz verläuft periodisch zwischen einem ersten Wert - zum Beispiel 23,8 GHz - und einem zweiten Wert - zum Beispiel 24,2 GHz. Die mittlere Frequenz des Sendesignals S₀ beträgt im Ausführungsbeispiel 24 GHz.

Der lokale Oszillator 16 wird durch die Steuereinrichtung 5 angesteuert. Der Oszillator 16 ist zum Beispiel ein spannungsgesteuerter Oszillator (voltage controlled oszillator), welcher das Sendesignal S₀.mit einer solchen Frequenz erzeugt, die abhängig von der Amplitude einer von der Steuereinrichtung 5 an dem Oszillator 15 bereitgestellten Gleichspannung ist.

Das Radargerät 3, 4 umfasst außerdem einen oder - wie in Fig. 2 schematisch dargestellt - mehrere Empfänger 17. Dieser umfasst eine Empfangsantenneneinrichtung 18, die im Ausführungsbeispiel eine Vielzahl von Patch-Antennen umfassen kann. Die Empfangsantenneneinrichtung 18 kann ebenfalls eine zweidimensionale Antennenmatrix (Array) sein. Die Empfangsantenneneinrichtung 18 ist mit einer Speiseschaltung 19 gekoppelt. Die Speiseschaltung 19 stellt ein Signal S_{E} bereit, welches ein Empfangssignal ist. Das empfangene Signal S_{E} wird mit Hilfe eines rauscharmen Verstärkers 20 (low noise amplifier) verstärkt, mit Hilfe eines Mischers 21 herabgemischt, mit Hilfe eines Tiefpass-Filters 22 tiefpass-gefiltert und mittels eines Analog-DigitalWandlers 23 analog-digital-gewandet. Zum Herabmischen des empfangenen Signals S_{E} wird das Sendesignal S₀ verwendet; das Sendesignal S₀ wird an den Mischer 21 geführt, nämlich beispielsweise mit Hilfe eines Richtkopplers. Das empfangene digitale Signal S_{E} wird dann mit Hilfe der Steuereinrichtung 5 verarbeitet. Aus dem Signal S_{E} bestimmt die Steuereinrichtung 5 zum Beispiel die Entfernung eines Objektes, seine relative Geschwindigkeit, wie auch einen Zielwinkel.

Fig. 2 ist eine Prinzipdarstellung des Radargeräts 3, 4 und zeigt somit lediglich schematisch die Funktionsweise des Radargeräts 3, 4. Also ist das Radargerät 3, 4 in Fig. 2 lediglich beispielhaft abgebildet.

Die Sendeantenneneinrichtung 13, und genauer gesagt die Speiseschaltung 15, kann so gesteuert werden, dass sie zeitlich nacheinander durch Umschalten verschiedene Teilbereiche des Erfassungsbereichs 7 beziehungsweise 8 beleuchtet. Zum Beispiel kann dazu eine Sendekeule der Sendeantenneneinrichtung 13 elektronisch in azimutaler Richtung geschwenkt werden, nämlich nach dem Phase-Array-Prinzip. Die Empfangsantenneneinrichtung 18 kann in diesem Fall in azimutaler Richtung eine breite Empfangscharakteristik aufweisen, mit der der gesamte Erfassungsbereich 7 beziehungsweise 8 abgedeckt wird. Andere Ausgestaltungen können alternativ schmale Empfangswinkelbereiche in Verbindung mit breiten Sendekeulen realisieren.

Vorliegend richtet sich das Interesse auf die Speiseschaltung 15 der Sendeantenneneinrichtung 13, nämlich auf ihre Dämpfungsglieder. Bezug nehmend auf Fig. 3 beinhaltet die Sendeantenneneinrichtung 13 - wie bereits ausgeführt - eine Vielzahl von Antenneneinheiten 14, die wiederum eine Mehrzahl von einzelnen Patch-Antennen aufweisen. Und zwar beinhaltet die Sendeantenneneinrichtung 13 im Ausführungsbeispiel acht gleich aufgebaute Antenneneinheiten 14. Jede Antenneneinheit 14 umfasst im Ausführungsbeispiel sechs Patch-Antennenelemente.

Alle Patch-Antennenelemente sind an einem gemeinsamen Substrat angebracht. An diesem Substrat angebracht ist außerdem die Speiseschaltung 15, die im Ausführungsbeispiel in Mikrostreifentechnologie aufgebaut ist.

Die Speiseschaltung 15 umfasst für jede Antenneneinheit 14 außer den beiden mittleren Antenneneinheiten 14 jeweils ein Dämpfungsglied, über welches die jeweilige Antenneneinheit 14 mit dem lokalen Oszillator 16 gekoppelt ist. Und zwar sind die äußersten Antenneneinheiten 14 jeweils mit einem Dämpfungsglied 24 gekoppelt, die zu den äußersten Antenneneinheiten 14 benachbarten Antenneneinheiten mit jeweils einem Dämpfungsglied 25, und die zu den mittleren Antenneneinheiten 14 benachbarten Antenneneinheiten 14 mit jeweils einem Dämpfungsglied 26. Die Dämpfungsglieder 24, 25, 26 weisen paarweise jeweils gleiche Dämpfungswerte auf:

Die Dämpfungsglieder 24 haben einen ersten Dämpfungswert, die Dämpfungsglieder 25 einen zweiten Dämpfungswert, und die Dämpfungsglieder 26 einen dritten Dämpfungswert. Der erste Dämpfungswert ist größer als der zweite Dämpfungswert, und der zweite Dämpfungswert ist größer als der dritte Dämpfungswert. Alle Dämpfungsglieder 24, 25, 26 haben gleiche Phaseneigenschaften, das heißt die Phase einer sich über die Dämpfungsglieder 24, 25, 26 ausbreitenden elektromagnetischen Welle wird um denselben Betrag verschoben. Also weisen alle Dämpfungsglieder 24, 25, 26 dieselbe effektive Leitungslänge und somit dieselbe Phasenverschiebung auf.

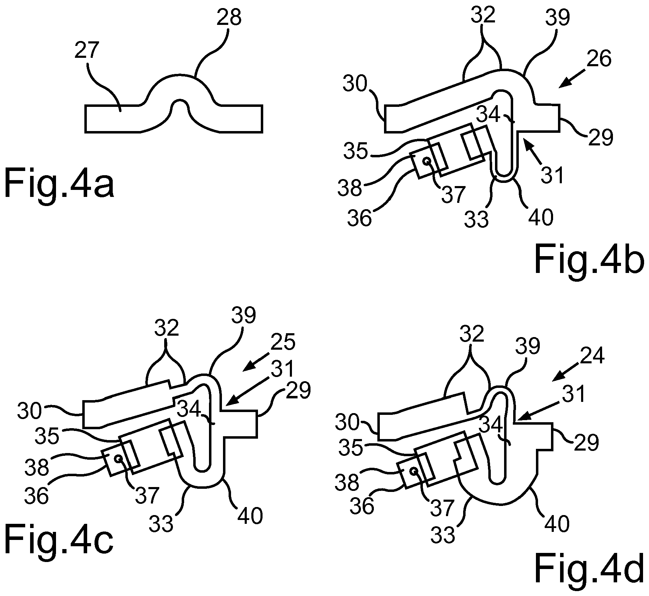

Die mittleren Antenneneinheiten 14 sind mit keinen Dämpfungsgliedern, sondern jeweils über eine Mikrostreifenleitung 27 mit dem lokalen Oszillator 16 gekoppelt. Eine solche Mikrostreifenleitung 27 ist in Fig. 4a gezeigt. Wie aus Fig. 4a hervor geht, weist die Mikrostreifenleitung 27 einen schlingenförmigen Verlauf mit einer Mäanderschlinge 28 auf. Somit kann die effektive Leitungslänge der Mikrostreifenleitung 27 an die effektive Länge der Dämpfungsglieder 24, 25, 26 angepasst werden, nämlich bei dem vorgegebenen, zur Verfügung stehenden Bauraum. Die Phasenverschiebung durch die Mikrostreifenleitung 27 ist somit an die Phasenverschiebungen durch die Dämpfungsglieder 24, 25, 26 angepasst. Die Mikrostreifenleitung 27 ist einerseits mit der zugeordneten Antenneneinheit 14 verbunden; andererseits ist sie mit dem lokalen Oszillator 16 gekoppelt, beispielsweise über ein Koaxialkabel oder einen anderen Wellenleiter.

Die Dämpfungsglieder 24, 25, 26 gemäß einer Ausführungsform der Erfindung sind in den Figuren 4b bis 4d gezeigt. Auch die Dämpfungsglieder 24, 25, 26 sind in Mikrostreifentechnik bereitgestellt und umfassen somit Mikrostreifenleitungen. Ein erstes Tor beziehungsweise erster Anschluss 29 der jeweiligen Dämpfungsglieder 24, 25, 26 ist mit dem lokalen Oszillator 16 gekoppelt, beispielsweise über ein Koaxialkabel oder einen anderen Wellenleiter. Ein zweites Tor 30 ist mit der jeweiligen Antenneneinheit 14 verbunden. Die Dämpfungsglieder 24, 25, 26 weisen jeweils eine Verzweigungseinheit, nämlich hier eine Parallelzweigung 31 (T-junction) auf, welche einen ersten Leitungszweig 32 sowie einen zweiten Leitungszweig 33 aufweist. Die beiden Leitungszweige 32, 33 sind an einem Verzweigungspunkt 34 zusammengeführt, nämlich an dem ersten Tor 29. Der erste Leitungszweig 32 koppelt somit die zugeordnete Antenneneinheit 14 mit dem lokalen Oszillator 16. Über den zweiten Leitungszweig 33 wird ein Teil der Leistung des Sendesignals S₀ abgegriffen und abgeführt. Diese abgegriffene elektromagnetische Welle wird über einen Widerstand 35 hin zu einem dritten Tor 36 des Dämpfungsgliedes 24, 25, 26 geführt, welches über ein elektrisches Kurzschlusselement 37 (via) auf Maße geführt ist. Das jeweilige Kurzschlusselement 37 erstreckt sich also senkrecht zur Zeichnungsebene und über das Substrat hindurch. Der Widerstand 35 ist im Ausführungsbeispiel ein SMD-Bauteil und liegt einerseits an einer von der Parallelzweigung 31 getrennten Mikrostreifen-Kontaktfläche 38 und andererseits an einem Endbereich des zweiten Leitungszweiges 33 an. Das Kurzschlusselement 37 verbindet dabei die Mikrostreifen-Kontaktfläche 38 mit der Masse.

Der Widerstand 35 mit dem Kurzschlusselement 37 bilden insgesamt ein reflexionsfreies Abschlusselement.

Die Parallelzweigung 31 weist zwei λ/4-Transformatoren 39, 40 auf, die die Funktion der Anpassung der Eingangsimpedanz an die Ausgangsimpedanz aufweisen. Durch geeignete Wahl der Impedanzen der beiden λ/4-Transformatoren lassen sich die gewünschten Leistungsverteilungen der Parallelzweigung 31 und somit die erforderlichen Dämpfungswerte realisieren.

In Fig. 4b ist dasjenige Dämpfungsglied 26 gezeigt, welches zur Speisung der mit den mittleren Antenneneinheiten 14 benachbarten Antenneneinheiten 14 dient. Dieses Dämpfungsglied 26 hat einen geringen Dämpfungswert - der λ/4-Transformator 39 ist deutlich breiter als der λ/4-Transformator 40.

In Fig. 4c ist dasjenige Dämpfungsglied 25 gezeigt, welches den zweiten, mittleren Dämpfungswert aufweist. Der λ/4-Transformator 39 ist nun etwas schmaler als der gemäß Fig. 4b und auch ein wenig schmaler als der λ/4-Transformator 40 des zweiten Leitungszweigs 33.

Das in Fig. 4d gezeigte Dämpfungsglied 24 wird zur Speisung der äußersten Antenneneinheiten 14 eingesetzt. Es weist den größten Dämpfungswert auf; der λ/4-Transformator 39 ist entsprechend deutlich schmaler als der λ/4-Transformator 40.

Prinzipiell können die Dämpfungsglieder 24, 25, 26 auch mit Richtkopplern realisiert werden. Dann wird mit Hilfe eines solchen Richtkopplers ein Teil der Leistung des Sendesignals S₀ abgegriffen und kann ebenfalls auf ein reflexionsfreies Abschlusselement geführt werden.

Insgesamt wird also ein Dämpfungsglied 24, 25, 26 bereitgestellt, welches kostengünstig, höchst genau bezüglich der Phasenverschiebung und des Dämpfungswertes, wie auch in großen Stückzahlen reproduzierbar hergestellt werden kann. Es sind keine zusätzlichen Bauelemente - wie zum Beispiel SMD-Bauelemente - in denjenigen Leitungszweig 32 eingesetzt, über welchen die Antenneneinheit 14 gespeist wird. Somit wird auch die Phase der elektromagnetischen Welle nicht beeinträchtigt. Ein gewünschter Dämpfungswert lässt sich durch eine entsprechende Auswahl der Breite von λ/4-Transformatoren 39, 40 ohne viel Aufwand genau einstellen.

## Patentansprüche

1. Fahrerassistenzeinrichtung (2) für ein Fahrzeug (1), mit einem Radargerät (3, 4) zur Detektion von fahrzeugexternen Objekten, welches eine Antenneneinheit (14) zum Abstrahlen und/oder Empfangen elektromagnetischer Wellen (S₀, S_{E}) sowie ein mit der Antenneneinheit (14) gekoppeltes Dämpfungsglied (24, 25, 26) zum Leiten und Dämpfen der elektromagnetischen Wellen (S₀, S_{E}) aufweist, über welches die Antenneneinheit (14) mit einer Sender- und/oder Empfängereinrichtung (16, 17) des Radargeräts (3, 4) koppelbar ist,
**dadurch gekennzeichnet, dass**
das Dämpfungsglied (24, 25, 26) eine Verzweigungseinheit (31) mit einem ersten Leitungszweig (32) zum Leiten der gedämpften elektromagnetischen Wellen (S₀, S_{E}) zwischen der Sender- und/oder Empfängereinrichtung (16, 17) einerseits und der Antenneneinheit (14) andererseits sowie einen mit dem ersten Leitungszweig (32) gekoppelten zweiten Leitungszweig (33) aufweist, welcher mit einem reflexionsfreien Abschlusselement (35, 37) abgeschlossen ist, wobei
das Radargerät (3, 4) zumindest zwei Antenneneinheiten (14) aufweist, die jeweils über ein genanntes Dämpfungsglied (24, 25, 26) mit der Sender- und/oder Empfängereinrichtung (16, 17) des Radargeräts (3, 4) koppelbar sind, die Dämpfungsglieder (24, 25, 26) unterschiedliche Dämpfungswerte und
alle Dämpfungsglieder (24, 25, 26) dieselbe effektive Leitungslänge und somit dieselbe Phasenverschiebung aufweisen.

2. Fahrerassistenzeinrichtung (2) nach Anspruch 1,
**dadurch gekennzeichnet, dass**
die Verzweigungseinheit (31) in Streifenleitertechnik, insbesondere in Mikrostreifentechnik, realisiert ist, so dass der erste und der zweite Leitungszweig (32, 33) jeweils eine Streifenleitung, insbesondere eine Mikrostreifenleitung, sind.

3. Fahrerassistenzeinrichtung (2) nach Anspruch 1 oder 2,
**dadurch gekennzeichnet, dass**
die Verzweigungseinheit (31) eine Parallelzweigung (31) aufweist, so dass der erste und der zweite Leitungszweig (32, 33) miteinander elektrisch verbunden sind.

4. Fahrerassistenzeinrichtung (2) nach Anspruch 1 oder 2,
**dadurch gekennzeichnet, dass**
die Verzweigungseinheit (31) einen Richtkoppler, insbesondere einen TEM-Leitungskoppler, aufweist, wobei bevorzugt der erste Leitungszweig (32) von dem zweiten Leitungszweig (33) elektrisch getrennt und parallel zum zweiten Leitungszweig (33) angeordnet ist.

5. Fahrerassistenzeinrichtung (2) nach einem der vorhergehenden Ansprüche,
**dadurch gekennzeichnet, dass**
das Abschlusselement (35, 37) einen Widerstand (35) aufweist, der über ein elektrisches Kurzschlusselement (37) auf ein Bezugspotential geführt ist.

6. Fahrerassistenzeinrichtung (2) nach einem der Ansprüche 1 bis 4,
**dadurch gekennzeichnet, dass**
das Abschlusselement (35, 37) ein von einem Bezugspotential elektrisch getrennter Absorber ist.

7. Fahrzeug (1), insbesondere Kraftwagen, mit einer Fahrerassistenzeinrichtung (2) nach einem der vorhergehenden Ansprüche.

8. Verfahren zum Betreiben eines Radargerätes einer Fahrerassistenzeinrichtung (2) in einem Fahrzeug (1), wobei elektromagnetische Wellen (S₀, S_{E}) durch eine Antenneneinheit (14) des Radargerätes (3, 4) abgestrahlt und/oder empfangen und über ein mit der Antenneneinheit (14) gekoppeltes Dämpfungsglied (24, 25, 26) geleitet und gedämpft werden, über welches die Antenneneinheit (14) mit einer Sender- und/oder Empfängereinrichtung (16, 17) des Radargeräts (3, 4) gekoppelt ist,
**dadurch gekennzeichnet, dass**
die elektromagnetischen Wellen (S₀, S_{E}) über einen ersten Leitungszweig (32) einer Verzweigungseinheit (31) des Dämpfungsgliedes (24, 25, 26) zwischen der Sender-und/oder Empfängereinrichtung (16, 17) einerseits und der Antenneneinheit (14) andererseits geleitet werden und über einen mit dem ersten Leitungszweig (32) gekoppelten zweiten Leitungszweig (33) auf ein reflexionsfreies Abschlusselement (35, 37) geführt werden, wobei das Radargerät (3, 4) zumindest zwei Antenneneinheiten (14) aufweist, die jeweils über ein genanntes Dämpfungsglied (24, 25, 26) mit der Sender- und/oder Empfängereinrichtung (16, 17) des Radargeräts (3, 4) koppelbar sind, die Dämpfungsglieder (24, 25, 26) unterschiedliche Dämpfungswerte und alle Dämpfungsglieder (24, 25, 26) dieselbe effektive Leitungslänge und somit dieselbe Phasenverschiebung aufweisen.

## Claims

1. Driver assistance device (2) for a vehicle (1), having a radar apparatus (3, 4) for detecting objects which are external to the vehicle, which radar apparatus (3, 4) has an antenna unit (14) for irradiating and/or receiving electromagnetic waves (S₀, S_{E}) and a damping element (24, 25, 26) which is coupled to the antenna unit (14) and has the purpose of directing and damping the electromagnetic waves (S₀, S_{E}), by means of which damping element (24, 25, 26) the antenna unit (14) can be coupled to a transmitter and/or receiver device (16, 17) of the radar apparatus (3, 4),
**characterized in that**
the damping element (24, 25, 26) has a branching unit (31) with a first line branch (32) for directing the damped electromagnetic waves (S₀, S_{E}) between the transmitter and/or receiver device (16, 17), on the one hand, and the antenna unit (14) on the other, as well as a second line branch (33) which is coupled to the first line branch (32) and is terminated with a reflection-free terminating element (35, 37), wherein the radar apparatus (3, 4) has at least two antenna units (14) which can each be coupled via a specified damping element (24, 25, 26) to the transmitter and/or receiver device (16, 17) of the radar apparatus (3, 4), the damping elements (24, 25, 26) have different damping values and all the damping elements (24, 25, 26) have the same effective line length and thus the same phase shift.

2. Driver assistance device (2) according to Claim 1,
**characterized in that**
the branching unit (31) is implemented in strip conductor technology, in particular in microstrip technology, with the result that the first and the second line branches (32, 33) are each a strip line, in particular a microstrip line.

3. Driver assistance device (2) according to Claim 1 or 2,
**characterized in that**
the branching unit (31) has a parallel branch (31), with the result that the first and the second line branches (32, 33) are electrically connected to one another.

4. Driver assistance device (2) according to Claim 1 or 2,
**characterized in that**
the branching unit (31) has a directional coupler, in particular a TEM line coupler, wherein the first line branch (32) is preferably electrically isolated from the second line branch (33) and is arranged parallel to the second line branch (33).

5. Driver assistance device (2) according to one of the preceding claims,
**characterized in that**
the terminating element (35, 37) has a resistor (35) which is connected to a reference potential via an electrical short-circuiting element (37).

6. Driver assistance device (2) according to one of Claims 1 to 4,
**characterized in that**
the terminating element (35, 37) is an absorber which is electrically isolated from a reference potential.

7. Vehicle (1), in particular a motor vehicle, having a driver assistance device (2) according to one of the preceding claims.

8. Method for operating a radar apparatus of a driver assistance device (2) in a vehicle (1), wherein electromagnetic waves (S₀, S_{E}) are irradiated and/or received by an antenna unit (14) of the radar apparatus (3, 4), and are directed and damped by means of a damping element (24, 25, 26) which is coupled to the antenna unit (14) and by means of which the antenna unit (14) is coupled to a transmitter and/or receiver device (16, 17) of the radar apparatus (3, 4),
**characterized in that**
the electromagnetic waves (S₀, S_{E}) are directed via a first line branch (32) of a branching unit (31) of the damping element (24, 25, 26) between the transmitter and/or receiver device (16, 17), on the one hand and the antenna unit (14), on the other, and are conducted to a reflection-free terminating element (35, 37) via a second line branch (33) which is coupled to the first line branch (32), wherein the radar apparatus (3, 4) has at least two antenna units (14) which can each be coupled via a specified damping element (24, 25, 26) to the transmitter and/or receiver device (16, 17) of the radar apparatus (3, 4), the damping elements (24, 25, 26) have different damping values and all the damping elements (24, 25, 26) have the same effective line length and thus the same phase shift.

## Revendications

1. Dispositif d'aide à la conduite (2) pour un véhicule (1), avec un appareil radar (3, 4) destiné à détecter des objets externes au véhicule qui présente une unité d'antenne (14) pour l'émission et/ou la réception d'ondes électromagnétiques (S_{O}, S_{E}) ainsi qu'un organe affaiblisseur (24, 25, 26) couplé à l'unité d'antenne (14) pour conduire et affaiblir les ondes électromagnétiques (S_{O}, S_{E}), par le biais duquel l'unité d'antenne (14) peut être couplée à un dispositif émetteur et/ou récepteur (16, 17) de l'appareil radar (3, 4),
**caractérisé en ce que**
l'organe affaiblisseur (24, 25, 26) présente une unité de bifurcation (31) avec une première branche de ligne (32) pour conduire les ondes électromagnétiques (S_{O}, S_{E}) affaiblies entre le dispositif émetteur et/ou récepteur (16, 17) d'une part et l'unité d'antenne (14) d'autre part, ainsi qu'une deuxième branche de ligne (33) qui est couplée à la première branche de ligne (32) et qui est terminée par un élément de terminaison (35, 37) sans réflexion, l'appareil radar (3, 4) présentant au moins deux unités d'antenne (14) qui, respectivement par le biais d'un organe affaiblisseur (24, 25, 26) cité, peuvent être couplées au dispositif émetteur et/ou récepteur (16, 17) de l'appareil radar (3, 4), les organes affaiblisseurs (24, 25, 26) présentant différentes valeurs d'affaiblissement, et tous les organes affaiblisseurs (24, 25, 26) présentant la même longueur de ligne effective et donc le même déphasage.

2. Dispositif d'aide à la conduite (2) selon la revendication 1,
**caractérisé en ce que**
l'unité de bifurcation (31) est réalisée dans la technique de conducteurs en ruban, en particulier dans la technique de microruban, de telle sorte que la première et la deuxième branche de ligne (32, 33) sont respectivement une ligne en ruban, en particulier une ligne en microruban.

3. Dispositif d'aide à la conduite (2) selon la revendication 1 ou 2,
**caractérisé en ce que**
l'unité de bifurcation (31) présente une bifurcation en parallèle (31) de telle sorte que la première et la deuxième branche de ligne (32, 33) sont raccordées électriquement l'une à l'autre.

4. Dispositif d'aide à la conduite (2) selon la revendication 1 ou 2,
**caractérisé en ce que**
l'unité de bifurcation (31) présente un coupleur directionnel, en particulier un coupleur de ligne TEM, la première branche de ligne (32) étant de préférence séparée électriquement de la deuxième branche de ligne (33) et étant disposée parallèlement à la deuxième branche de ligne (33).

5. Dispositif d'aide à la conduite (2) selon l'une des revendications précédentes,
**caractérisé en ce que**
l'élément de terminaison (35, 37) présente une résistance (35) qui est conduite à un potentiel de référence par le biais d'un élément de court-circuit (37) électrique.

6. Dispositif d'aide à la conduite (2) selon l'une des revendications 1 à 4,
**caractérisé en ce que**
l'élément de terminaison (35, 37) est un absorbeur séparé électriquement d'un potentiel de référence.

7. Véhicule (1), en particulier véhicule à moteur, avec un dispositif d'aide à la conduite (2) selon l'une des revendications précédentes.

8. Procédé de fonctionnement d'un appareil radar d'un dispositif d'aide à la conduite (2) dans un véhicule (1), des ondes électromagnétiques (S_{O}, S_{E}) étant émises et/ou reçues par une unité d'antenne (14) de l'appareil radar (3, 4) et conduites et affaiblies par le biais d'un organe affaiblisseur (24, 25, 26) couplé à l'unité d'antenne (14), par le biais duquel l'unité d'antenne (14) est couplée à un dispositif émetteur et/ou récepteur (16, 17) de l'appareil radar (3, 4),
**caractérisé en ce que**
les ondes électromagnétiques (S_{O}, S_{E}) sont conduites par le biais d'une première branche de ligne (32) d'une unité de bifurcation (31) de l'organe affaiblisseur (24, 25, 26) entre le dispositif émetteur et/ou récepteur (16, 17) d'une part et l'unité d'antenne (14) d'autre part et guidées vers un élément de terminaison (35, 37) sans réflexion par le biais d'une deuxième branche de ligne (33) couplée à la première branche de ligne (32), l'appareil radar (3, 4) présentant au moins deux unités d'antenne (14) qui peuvent être couplées, respectivement par le biais d'un organe affaiblisseur (24, 25, 26) cité, au dispositif émetteur et/ou récepteur (16, 17) de l'appareil radar (3, 4), les organes affaiblisseurs (24, 25, 26) présentant différentes valeurs d'affaiblissement et tous les organes affaiblisseurs (24, 25, 26) présentant la même longueur de ligne effective et donc le même déphasage.
